(19) Europäisches Patentamt
European Patent Office
Office européen des brevets

(11) **EP 2 491 793 B1**

(12) **EUROPEAN PATENT SPECIFICATION**

(45) Date of publication and mention
of the grant of the patent:
**19.10.2016 Bulletin 2016/42**

(51) Int Cl.:
*A23G 9/42* *(2006.01)*    *A23G 9/32* *(2006.01)*
*A23G 9/44* *(2006.01)*

(21) Application number: **10824974.9**

(22) Date of filing: **20.10.2010**

(86) International application number:
**PCT/JP2010/068475**

(87) International publication number:
**WO 2011/049125 (28.04.2011 Gazette 2011/17)**

(54) **ICE CREAM**

EISCREME

CRÈME GLACÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.10.2009 JP 2009241986**

(43) Date of publication of application:
**29.08.2012 Bulletin 2012/35**

(73) Proprietor: **Kao Corporation
Chuo-Ku
Tokyo 103-8210 (JP)**

(72) Inventor: **FUKUDA, Masahiro
Tokyo 131-8501 (JP)**

(74) Representative: **Hoffmann Eitle
Patent- und Rechtsanwälte PartmbB
Arabellastraße 30
81925 München (DE)**

(56) References cited:
**EP-A1- 2 098 121        WO-A1-2008/072360
WO-A1-2008/072360        CN-A- 1 934 981
JP-A- H0 541 949         JP-A- 2004 305 012
JP-A- 2005 058 211       JP-A- 2006 129 757
JP-A- 2006 129 757       JP-A- 2007 001 893
JP-A- 2007 001 893       JP-A- 2007 262 400
JP-A- 2008 253 173**

**Description**

**Field of the Invention**

This invention relates to an ice cream.

**Background of the Invention**

As ice creams with an added flavor of green tea, *matcha* ice creams with added *matcha* (powdered green tea) are known (Patent Document 1). However, an unpleasant characteristic taste such as astringency or bitterness becomes stronger than the umami of green tea, and upon production thereof, fine particles of *matcha* tend to aggregate into clumps and to result in a lowering of production efficiency. Even if fine particles of *matcha* can be dispersed to some extent, the resulting ice cream itself gives a powdery feeling on the tongue so that the smooth texture specific to ice creams tends to be impaired.
In order to solve such problems, ice creams with green tea extracts added thereto in place of matcha have been proposed (Patent Document 2).

**Prior Art Documents**

**Patent Documents**

Patent Document 1: JP-A-2008-253173
**Patent Document 2:** JP-A-5-41949

WO 2008/072360 and JP 2007-001893 describe catechin compositions with less unpleasant bitterness although containing unpolymerized catechins at a high concentration. In these compositions, the contents of gallate type catechins and other components are adjusted to specific ranges.
JP 2006-129757 (A) relates to a green tea extract reduced in bitter taste and harsh taste containing >=30 wt.% of epigallocatechin gallate and gallocatechin gallate as green tea catechin in total, and describes drink and food containing the green tea extract.
JP 2004-305012 concerns a method for producing decaffeinated tea extract where only caffeine is selectively reduced without reducing useful component(s) such as polyphenol, amino acid and/or inorganic salt.
CN 1934981 relates to a green tea ice cream and its production method. The production method includes the steps of green tea liquor preparation including pretreatment and pulping, blending solution preparation including proportioning blend and preparing blending solution, mixing, precooling, making cream and cold storage.
EP 2 098 121 and JP 2005 058211 describe beverages which contain catechins.
JP2007 262400 seeks to provide a polysaccharide composite material which enables to take a large amount of a plant extract containing a polyphenol such as catechin in a state inhibiting astringent taste and bitter taste, and further enables to expand the use to foods and the like, and to provide a method for producing the composite material.

**Summary of the Invention**

This invention provides an ice cream containing the following ingredients (A) and (B):

(A) the non-polymer catechins, and
(B) caffeine,

wherein a content mass ratio of the ingredient (B) to the ingredient (A), [(B)/(A)] is from 0.0001 to 0.18, wherein the content of the non-polymer catechins (A) in the ice cream is 0.1 to 0.8 mass%.
In another aspect, the invention also provides a method for improving shape retention properties of an ice cream, which comprises adding to the ice cream the following ingredients (A) and (B):

(A) the non-polymer catechins, and
(B) caffeine,

such that a content mass ratio of the ingredient (B) to the ingredient (A), [(B)/(A)] becomes from 0.0001 to 0.18, wherein the ingredient (A) is added such that a content of the ingredient (A) becomes from 0.1 to 0.8 mass%.

Yet another aspect of the invention concerns the use of the following ingredients (A) and (B) for improving a texture of an ice cream:

(A) the non-polymer catechins, and
(B) caffeine,

wherein said ingredients are added to the ice cream such that a content mass ratio of the ingredient (B) to the ingredient (A), [(B)/(A)] becomes from 0.0001 to 0.18, wherein the ingredient (A) is added such that a content of the ingredient (A) becomes from 0.1 to 0.8 mass%.

## Detailed Description of the Invention

As the content of solids in the formulation of an ice cream becomes greater, the ice cream generally tends to deteriorate more in overrun (aeration) by freezing in its production process, but is improved in the resistance to melting and losing its shape after the production (shape retention properties). On the other hand, the setting of a high overrun tends to lead to reductions in shape retention properties. A high-quality ice cream is, therefore, required to be excellent in shape retention properties at its maximum overrun.

However, the conventional ice creams with added green tea extracts thereto cannot achieve both a high overrun and high shape retention properties, and moreover, are insufficient in texture and refreshing sensation, due to the harshness intrinsic to the green tea extracts as a raw material. These physical properties, texture and refreshing sensation, therefore, tend to deteriorate after long term storage.

The present inventors have performed research on a variety of additives to be added to ice creams. As a result, it has been unexpectedly found that the texture, refreshing sensation and shape retention properties of an ice cream is pronouncedly improved by adding the non-polymer catechins derived from green tea and having specific properties.

The present invention provides an ice cream, which is excellent in shape retention properties at its maximum overrun and is good in texture and refreshing sensation. These texture and refreshing sensation remain stable without deterioration even after long-term storage.

According to the present invention, it is possible to provide an ice cream, which is excellent in shape retention properties at its maximum overrun and is good not only in melting mouth-feel but also in refreshing sensation. Even after long-term storage, these properties, mouth-feel and sensation are prevented from deterioration, and remain stable.

Owing to the inclusion of the non-polymer catechins derived from green tea and having the specific properties, the ice cream according to the present invention has been improved in preference by its green tea flavor, and moreover, physiological effects by the non-polymer catechins can be well expected from its continued ingestion.

A description will first be made about terms used in this specification.

The term "an ice cream" has a concept that encompasses "icecreamproduct", "icemilkproduct", "lacticiceproduct" and "ice confection product", and means those conforming to the Ministerial Ordinance Concerning Compositional Standards, etc. for Milk and Milk Products based on the provisions of the Food Sanitation Act; those conforming to the standards and criteria for foods, additives, etc. based on the provisions of the Food Sanitation Act, prepared by freezing carbohydrate solutions or liquids with other foods mixed with carbohydrate solutions or by grinding or crushing edible ice, mixing carbohydrate solutions or other foods with the ground or crushed edible ice, and re-freezing the mixtures, and provided as foods in frozen forms; and those similar to the foregoing ones.

The term "(A) the non-polymer catechins" is a generic term, which collectively encompasses non-epi-form catechins such as cat e chin, gallocatechin, catechin gallate and gallocatechin gallate, and epi-form catechins such as epicatechin, epigallocatechin, epicatechin gallate and epigallocatechin gallate. The concentration of the non-polymer catechins is defined based on the total amount of the above-described eight non-polymer catechins.

The term "gallate forms of the non-polymer catechins (hereinafter, which may also be simply called "gallate forms")" is a generic term, which collectively encompasses catechin gallate, gallocatechin gallate, epicatechin gallate and epigallocatechin gallate. The term "ratio of gallate forms in the non-polymer catechins (hereinafter, which may also be called "ratio of gallate forms") " indicates the value, as expressed in terms of percentage, of a total mass of the four gallate forms of non-polymer catechins based on a total mass of the eight non-polymer catechins.

A description will next be made about the ice cream according to the present invention and the methods according to the present invention for improving the shape retention properties and texture of the ice cream.

The ice cream according to the present invention is characterized in that the non-polymer catechins (A) and caffeine (B) are contained and the content mass ratio of the caffeine (B) to the non-polymer catechins (A), [(B)/(A)] is from 0.0001 to 0.18.

Further, the methods according to the present invention for improving the shape retention properties and texture of the ice cream are characterized in that the non-polymer catechins (A) and caffeine (B) are added to the ice cream such that the content mass ratio of the caffeine (B) to the non-polymer catechins (A), [(B)/(A)] becomes from 0.0001 to 0.18.

The content of the non-polymer catechins (A) is from 0.1 to 0.8 mass% in the ice cream according to the present invention. When the content of the non-polymer catechins (A) falls within the above-described range, the shape retention properties at the maximum overrun are excellent, the texture and refreshing sensation of the ice cream remain stable over a long term, and moreover, the flavor of the ice cream is hardly affected by the bitterness and astringency of the non-polymer catechins themselves.

Also, the ratio of gallate forms in the non-polymer catechins may be preferably from 5 to 55 mass%, more preferably from 8 to 53 mass%, even more preferably from 10 to 50 mass% from the viewpoints of texture and refreshing sensation.

Such non-polymer catechins (A) are contained in a green tea extract. Exemplifiable as green tea include *sencha, bancha, tencha, kamairicha, kukicha, bocha, mecha* or the like manufactured from teas selected from the Genus Camellia, for example, C. *var. sinensis* (including the *Yabukita* variety), *C. var. assamica* and hybrids thereof.

The green tea extract can be obtained from green tea with hot water or a water-soluble organic solvent by a known extraction method such as kneader extraction or column extraction. The term "green tea extract" as used herein means one which has not been subjected to concentration or purification processing.

The non-polymer catechins (A) for use in the present invention has been significantly lowered in the content of caffeine compared with a green tea extract obtained by such extraction processing. Described specifically, the content mass ratio of the caffeine (B) to the non-polymer catechins (A), [(B)/(A)] is from 0.0001 to 0.18, and its lower limit may be preferably 0.0005, more preferably 0.001, even more preferably 0.002 from the economical viewpoint, while its upper limit may be preferably 0.15, more preferably 0.12, even more preferably 0.1 from the viewpoints of improvements in texture, refreshing sensation and shape retention properties.

To control the mass ratio [(B)/(A)] within the above-described range, the green tea extract needs to be purified to lower the absolute amount of caffeine (B) in the green tea extract. As its purification method, any one or a combination of two or more of, for example, the below-described methods (i) to (iv) may be exemplified.

(i) a method that suspends the green tea extract in water or a mixture of water and a water-soluble organic solvent (for example, ethanol) (hereinafter called "an aqueous solution of organic solvent") and removes the resulting precipitates.

(ii) a method that subjects the green tea extract to tannase treatment, and further, bringing the treated green tea extract into contact with at least one adsorbent selected from activated carbon, acid clay and activated clay (for example, JP-A-2007-282568).

(iii) a method that subsequent to adsorption of the green tea extract on a synthetic adsorbent, and after that brings an aqueous solution of organic solvent into contact with the synthetic adsorbent to desorb the non-polymer catechins (for example, JP-A-2006-160656).

(iv) a method that subsequent to adsorption of the green tea extract on a synthetic adsorbent, and after that brings an aqueous solution of organic solvent or a basic aqueous solution (for example, an aqueous solution of sodium hydroxide) into contact with the synthetic adsorbent to desorb the non-polymer catechins, and then, brings the resulting, non-polymer catechins-eliminated solution into contact with activated carbon (for example, JP-A-2008-079609).

As the green tea extract, one subjected to tannase treatment may also be used in the above-described methods (i), (iii) and (iv). The term "tannase treatment" as used herein means to bring a green tea extract into contact with an enzyme having tannase activity. It is to be noted that as a specific procedure in tannase treatment, a known method may be adopted, for example, the method disclosed in JP-A-2004-321105 is exemplified.

In the above-described purification method, a concentrated green tea extract or a green tea extract with a concentrated green tea extract added therein may be used instead of the green tea extract. The term "concentrated green tea extract" as used herein means one obtained by removing a portion of a solvent from a green tea extract such that the concentration of the non-polymer catechins is increased. The concentrated green tea extract may be prepared, for example, by the method disclosed in JP-A-59-219384, JP-A-4-20589, JP-A-5-260907, JP-A-5-306279 or the like. As the concentrated green tea extract, a commercially-available product may also be used. Illustrative are "POLYPHENON" (product of Mitsui Norin Co., Ltd.), "TEAFURAN" (product of ITO EN, LTD.), "SUNPHENON" (product of Taiyo Kagaku Co., Ltd.) or the like.

The concentration of the non-polymer catechins in the solids of the purified green tea extract for use in the ice cream according to the present invention may be preferably from 55 to 90 mass%, more preferably from 55 to 75 mass% in that excellent shape retention properties are available even when the overrun is set high. For controlling the concentration of the non-polymer catechins within the above-described range, it is preferred to conduct any one or a combination of two or more of the above-described methods (i) to (iv) .

The ice cream according to the present invention may contain, for example, at least one ingredient selected from (C) proteins, (D) edible oils or fats and (E) saccharides, although no particular limitation is imposed on the kind of the ice cream.

Examples of the proteins (C) include water-soluble proteins such as skimmed milk powder, skimmed milk and egg yolks or the like. They may be used either singly or in combination.

The content of the protein (C) may preferably be from 2 to 10 mass%, more preferably from 2 to 8 mass%, even more preferably from 3 to 5 mass% in terms of solids in the ice cream according to the present invention. A content of the protein (C) within the above-described range can sufficiently provide the ice cream with body in taste.

Examples of the edible oils or fats (D) include vegetable oils or fats, milkfats, and fractionated oils or fats, hardened oils or fats and transesterified oils or fats thereof or the like.

Illustrative of the milkfats are liquid milk products containing animal oils or fats, such as raw milk, low-fat milk, fresh cream and egg yolks, or animal oils or fats contained in whole milk powder or the like.

The content of the edible oils or fats (D) may be preferably from 2 to 20 mass%, more preferably from 5 to 15 mass%, even more preferably from 8 to 12 mass% in the ice cream according to the present invention. A content of the edible oils or fats within the above-described range can sufficiently provide the ice cream with smoothness.

Examples of the saccharides (E) include monosaccharides, disaccharides, oligosaccharides, complex polysaccharides, and sugar alcohols. They may be used either singly or in combination.

Among these saccharides (E), examples of the monosaccharides include tetroses, pentoses, hexoses and ketohexoses. Illustrative of the hexoses are aldohexoses such as glucose and ketohexoses such as fructose and tagatose. Usable examples of the monosaccharides include mixed monosaccharides, such as corn syrup, high-fructose corn syrup, fructoglucose syrup, glucofructose syrup, agape extract and honey. A preferred example of the complex polysaccharides is maltodextrin. In addition, polyhydric alcohols, for example, glycerols can also be used in the present invention. The content of such a saccharide may be preferably from 1 to 65 mass%, more preferably from 5 to 40 mass%, even more preferably from 10 to 20 mass% in the ice cream according to the present invention from the viewpoints of sufficiently providing the ice cream with sweetness and also improving the texture according to the ice cream.

A nonreducing sugar or sugar alcohol is preferred to improve the storage stability of the non-polymer catechins and to obtain optimal sweetness. Such nonreducing sugars and sugar alcohols may also be used in combination. As nonreducing sugars, oligosaccharides may be mentioned, including, for example, disaccharides such as sucrose, maltose, lactose, cellobiose and trehalose, trisaccharides such as raffinose, panose, melezitose and gentianose, and tetrasaccharides such as stachyose. Among these oligosaccharides, the important type is disaccharides, typical examples of which are saccharose available from sugarcane or sugar beet and sucrose known as beet sugar. Commercially-available usable products include granulated sugar, processed sugar, liquid sugar, sugarcanes, maple syrup or the like, all of which are ref ined sugars. From the viewpoint of calories , a sugar alcohol may be used. As the sugar alcohol, erythritol, sorbitol, xylitol, maltitol, lactitol, palatinose, mannitol or the like is used suitably. Among these, erythritol is most preferred because it is low in calorific value and can hence be added in a greatest amount. The content of such a nonreduc ing sugar or sugar alcohol may be preferably from 1 to 65 mass%, more preferably from 5 to 40 mass%, even more preferably from 10 to 20 mass% in the ice cream according to the present invention.

In addition to the above-described saccharide, a natural sweetener or an artificial sweetener may be also added. The content of the natural sweetener or artificial sweetener may be preferably from 0.0001 to 5.0 mass%, more preferably from 0.001 to 2.0 mass%, even more preferably from 0.001 to 1.0 mass%. Examples of the artificial sweetener include high-sweetness sweeteners such as aspartame, sucralose, saccharin, cyclamate, acesulfame-K, L-aspartyl-L-phenylalanine lower alkyl ester sweeteners, L-aspartyl-D-alanine amide, L-aspartyl-D-serine amide, L-aspartyl-hydroxymethylalkaneamide sweeteners and L-aspartyl-1-hydroxyethylalkaneamide sweeteners, thaumatin, glycyrrhizin, synthetic alkoxyaromatic compounds or the like. Stevioside and other natural-source sweeteners are also usable.

It is preferred for the ice cream according to the present invention to incorporate preferably from 20 to 50 mass%, more preferably from 22 to 40 mass%, even more preferably from 25 to 38 mass%, based on the entirety of the ice cream, of solids in that excellent shape retention properties are available even when its overrun is set high. The overrun may be set preferably at 110% or higher, more preferably at 115% or higher, even more preferably at 120% or higher, and on the other hand, its upper limit may be set preferably at 300%, more preferably at 200%, even more preferably at 150% from the viewpoint of shape retention properties. The form retention rate at such an overrun may be preferably 90% or higher, more preferably 95% or higher. It is to be noted that "100% overrun" means the incorporation of as much air as an ice cream mix and that "ice cream mix" indicates a mixture of ice cream ingredients for production before incorporating air thereto. Further, these "overrun" and "form retention rate" can be measured by methods described in examples to be given subsequently herein.

The adoption of the above-described features makes it possible to provide the ice cream according to the present invention with excellent shape retention properties at its maximum overrun. Described specifically, the ice cream according to the present invention can retain, at the maximum overrun thereof, the shape during storage thereof without melt-out of its 90 mass% or more, preferably 95 mass% or more when the ice cream is allowed to stand for 1 hour under a temperature condition of 20°C after it is stored at -20°C. It is to be noted that such shape retention properties can be measured by a method described in the examples to be given subsequently herein.

The ice cream according to the present invention can be produced, for example, by mixing and pre-emusifying (C) a protein, (D) an edible oil or fat, (E) a saccharide, a purified green tea extract in which the mass ratio [(B)/(A)] and the concentration of the non-polymer catechins in solids have been controlled in the above-described ranges, and if necessary, ingredients such as an emulsifier and stabilizer, after that homogenizing (emulsifying) the resulting mixture and sterilizing the same, subsequently cooling the sterilized mixture to from 1 to 4°C to conduct aging for the preparation of an ice cream mix, and further, freezing the thus-obtained ice cream mix at from -6°C to -4°C (soft cream) or at -30°C or lower (hard type). By changing the production temperature as described above, each of the types can be produced.

Upon providing the ice cream according to the present invention in packages, packaging materials similar to those for general ice creams may be used. The ice cream according to the present invention can also be provided by filling it in cones, waffle dough, or the like. The ice cream according to the present invention can, therefore, meet any need of either on-trade or off-trade sales.

**Examples**

Measurements of non-polymer catechins and caffeine After a test material (1.7 g) was diluted to 100 g with a 0.1 mol/L aqueous solution of acetic acid and the dilute was centrifuged to remove proteins, it was subjected to filtration through a membrane filter (0.8 μm) After diluting with distilled water, the dilute was measured at a column temperature of 35°C by the gradient elution method by using a high-performance liquid chromatograph (model:"SCL-10AVP", manufactured by Shimadzu Corporation) fitted with a liquid chromatograph column packed with octadecyl group-introduced silica gel ("L-COLUMN TM ODS" ; 4.6 mm in diameter x 250 mm; product of Chemicals Evaluation and Research Institute, Japan). A mobile phase, Solution A, was a solution containing acetic acid at 0.1 mol/L in distilled water, while another mobile phase, Solution B, was a solution containing acetic acid at 0.1 mol/L in acetonitrile. The measurement was conducted under the conditions of 20 μL sample injection volume and 280 nm UV detector wavelength. After the measurement, the concentrations of the non-polymer catechins and caffeine were determined by conducting conversions based on the dilution rate.

Concentration gradient conditions (vol%)

| Time | Mobile phase A | Mobile phase B |
|------|----------------|----------------|
| 0 min | 97% | 3% |
| 5 min | 97% | 3% |
| 37 min | 80% | 20% |
| 43 min | 80% | 20% |
| 43.5 min | 0% | 100% |
| 48.5 min | 0% | 100% |
| 49 min | 97% | 3% |
| 62 min | 97% | 3% |

Overrun

The overrun of each ice cream was calculated using the following equation (1).

$$\text{Overrun (\%)} = \frac{Wa - Wb}{Wb} \times 100 \qquad (1)$$

In the above-described equation (1), Wa represents the mass of an ice cream mix of a constant volume, and Wb represents the mass in the same volume of the ice cream mix after whipping.

Evaluation of Shape Retention Properties

After each ice cream was filled in a plastic container, rapidly frozen and solidified with dry ice and after that stored in a refrigerator controlled at -20°C, the ice cream was evaluated by the below-described method. A screen was mounted over an opening of a funnel fixed above a graduated cylinder, each ice cream (50 g) of -20°C was placed on the screen, and upon a lapse of 1 hour under a temperature condition of 20°C, the mass (g) of the ice cream dropped into the graduated cylinder was measured. Further, based on the mass (g) of the dropped ice cream, the form retention rate (%) was calculated by the below-described equation (2).

$$\text{Form retention rate (\%)} = \frac{Wc - Wd}{Wc} \times 100 \qquad (2)$$

In the above-described equation (2), Wc represents the mass (50 g) of the ice cream, and Wd represents the mass of the dropped ice cream.

Sensory Test

(1) Evaluation of texture and refreshing sensation

The texture and refreshing sensation of each ice cream shortly after its production were evaluated by a panel of five experts in the below-described 5 stages, and after that their final scores were determined upon deliberation.

(2) Stability evaluation of texture and refreshing sensation

The texture and refreshing sensation of each ice cream after storage at -20°C for 28 days were evaluated by the panel of five experts in the below-described 5 stages, and after that their final scores were determined upon deliberation.

Evaluation standards for texture

5: Very smooth texture

4: Smooth texture

3: Normal texture

2: Inferior texture

1: Bad texture

Evaluation standards for refreshing sensation

5: Very high refreshing sensation
4: High refreshing sensation
3: Normal refreshing sensation
2: Inferior refreshing sensation
1: No refreshing sensation

Production Example 1

Production of "purified green tea extract 1"

A commercially-available, concentrated green tea extract ("POLYPHENONE HG", Mitsui Norin Co., Ltd. ; 1,000 g) was suspended in a 95 mass% aqueous solution of ethanol (9,000 g) under stirring conditions of room temperature and 200 r/min. After activated carbon ("KURARAY COAL GLC", product of Kuraray Chemical K.K. ; 200 g) and acid clay "MIZUKA-ACE #600", product of Mizusawa Industrial Chemicals, Ltd.; 500 g) were charged, the resulting mixture was continuously stirred for about 10 minutes. Subsequently, stirring was then continued for about 30 minutes still at room temperature. After the activated carbon, acid clay and precipitates were filtered by No. 2 filterpaper, the resulting filtrate was filtered again through a 0.2 μm membrane filter. Finally, deionized water (200 g) was added to the result ing filtrate, ethanol was distilled off at 40°C and 3.3 kPa to conduct reduced-pressure concentration. An aliquot (750 g) thereof was placed in a stainless steel vessel, the total amount was brought to 10,000 g with deionized water, and after that, a 5 mass% aqueous solution of sodium bicarbonate (30 g) was added to adjust its pH to 5.5. Under stirring conditions of 22°C and 150 r/min, a solution of "TANNASE KTFH" (product of Kikkoman Corporation; Industrial Grade, 500 U/g or more; 2.7 g) in deionized water (10.7 g) was subsequently added. Upon a lapse of 30 minutes at which the pH had dropped to 4.24, the enzyme reaction was terminated. After that, the stainless steel vessel was immersed in a hot bath of 95°C, and was held there at 90°C for 10 minutes to completely inactivate the enzyme activity. After the stainless steel vessel was cooled to 25°C, concentration processing was conducted to obtain a "purified green tea extract 1". In the "purified green tea extract 1", the concentration of the non-polymer catechins was 15.0 mass%, the concentration of the non-polymer catechins in solids was 60.5 mass%, the ratio of gallate forms in the non-polymer catechins was 45.1 mass%, and the caffeine/the non-polymer catechins was 0.06 (-).

Production Example 2

Production of "purified green tea extract 2"

Hot water of 88°C (4,500 g) was added to green tea leaves (produce of Kenya, Large leaf species; 300 g). After extraction for 60 minutes under stirring, coarse filtration was conducted through a 100-mesh screen. To remove fine powder of the green teat extract, a centrifugal separation operation was subsequently performed to obtain a "green tea extract" (3,680 g). After that, a portion of the green tea extract was freeze-dried. The resulting, concentrated green tea extract was placed in a stainless steel vessel, and a 5 mass% aqueous solution of sodium bicarbonate was added to adjust its pH to 5.5. A solution, which had been obtained by adding "TANNASE KTFH" (product of Kikkoman Corporation; Industrial Grade, 500 U/g or more) into deionized water at a concentration that "TANNASE KTFH" amounted to a solution of 430 ppm based on the concentrated green tea extract, was then charged under stirring conditions of 22°C and 150 r/min. Upon a lapse of 55 minutes at which the pH had dropped to 4.24, the enzyme reaction was terminated. After that, the stainless steel vessel was next immersed in a hot bath of 95°C, and was held there at 90°C for 10 minutes to completely inactivate the enzyme activity. After the stainless steel vessel was cooled to 25°C, concentration processing and freeze drying were conducted. A portion (85 g) of the resulting freeze-dried product was dissolved in deionized water (8,415 g) while stirring at 25°C for 30 minutes (a tannase-treated solution).

A synthetic adsorbent "SP-70" (product of Mitsubishi Chemical Corporation; 2,048 mL) was packed in a stainless column 1 (110 mm inner diameter x 230 mm height, volume: 2,185 mL). The tannase-treated solution (8,200 g, 4 times volumes relative to the synthetic adsorbent) was passed at SV = 1 ($h^{-1}$) through the column 1, and the outflow was discarded. Subsequent to washing with water, a 20 mass% aqueous solution of ethanol (10,240 mL, 5 times volumes relative to the synthetic adsorbent) was passed at SV = 1 ($h^{-1}$) through column to obtain a "resin-treated product 1" (pH 4.58). After that, granular activated carbon "TAIKO SGP" (product of Futamura Chemical Co. , Ltd.; 8.5 g) was then packed in a stainless steel column 2 (22 mm inner diameter x 145 mm height, volume: 55.1 mL). The "resin-treated product 1" was passed at SV = 1 ($h^{-1}$) through the column 2. Next, concentration processing and freeze drying were conducted to obtain a "purified green tea product 2". In the "purified green tea extract 2", the concentration of the non-polymer catechins was 77.6 mass%, the concentration of the non-polymer catechins in solids was 72.3 mass%, the ratio of gallate forms in the non-polymer catechins was 20.2 mass%, and the caffeine/the non-polymer catechins was 0.01 (-).

Example 1 (Reference)

Using the purified green tea extract 1 obtained in Production Example 1, an ice cream was produced through the steps to be described below. Ingredients other than a flavor, that is, rawmilk, raw cream, granulated sugar, egg yolks, an emulsifier, a stabilizer and a food color were heated to 85°C to dissolve them. Using a paddle mixer, the resulting solution was mixed for 10 minutes to conduct pre-emulsification. Using a Gaulin high-pressure homogenizer, emulsification was subsequently conducted once under a condition of 150 kg/cm². After the resulting emulsified product was heated up to 85°C for its sterilization, the emulsified product was cooled to 5°C and was maintained at the same temperature to conduct aging for diel. Subsequently, the fragrance was added to the aged mixture. An aliquot (0.7 L) of the resulting mixture was collected, and was placed in an ice cream freezer (manufactured by FMI Corporation). After initiation of cooling, the mixture was measured for overrun at every 5 minutes. By continuing stirring until a maximum overrun was reached, a lactic ice product was produced. The ingredient analysis data, overrun, shape retention properties, and evaluation results of the sensory tests shortly after the production and after storage of the thus-obtained lactic ice product are shown in Table 1. It is to be noted that "HOMOGEN-DM" (product of San-Ei Gen F.F.I., Inc.) was used as the emulsifier, "SANBEST NN-335" (thickening agent, product of San-Ei Gen F.F.I., Inc.) was used as the stabilizer, and "CAROTENE BASE 9400-SV" (product of San-Ei Gen F.F.I., Inc.) was used as the food color.

Example 2

A lactic ice product was produced in a similar manner as in Example 1 except that the contents of the purified green tea extract 1 and raw milk were changed. The analysis data, overrun, shape retention properties, and evaluation results of the sensory tests of the obtained lactic ice product are shown in Table 1.

Example 3

A lactic ice product was produced in a similar manner as in Example 1 except that the contents of the purified green tea extract 1 and raw milk were changed. The analysis data, overrun, shape retention properties, and evaluation results of the sensory tests of the obtained lactic ice product are shown in Table 1.

Example 4

A lactic ice product was produced in a similar manner as in Example 1 except that the purified green tea extract 2, which had been obtained in Production Example 2, was used at the ratio shown in Table 1 in place of the purified green tea extract 1 and the content of the raw milk was changed. The analysis data, overrun, shape retention properties, and evaluation results of the sensory tests of the obtained lactic ice product are shown in Table 1.

Example 5

A lactic ice product was produced in a similar manner as in Example 2 except that chocolate was used at the ratio shown in Table 1 in place of vanilla essence and the content of sugar was changed. The analysis data, overrun, shape retention properties, and evaluation results of the sensory tests of the obtained lactic ice product are shown in Table 1.

Example 6

A lactic ice product was produced in a similar manner as in Example 2 except that *matcha* was used at the ratio shown in Table 1 inplace of the vanilla essence. The analysis data, overrun, shape retention properties, and evaluation results of the sensory tests of the obtained lactic ice product are shown in Table 1.

Example 7

A lactic ice product was produced in a similar manner as in Example 2 except that sucralose was used at the ratio shown in Table 1 in place of granulated sugar. The analysis data, overrun, shape retention properties, and evaluation results of the sensory tests of the obtained lactic ice product are shown in Table 1.

Example 8

A lactic ice product was produced in a similar manner as in Example 2 except that erythritol was used at the ratio shown in Table 1 in place of the granulated sugar. The analysis data, overrun, shape retention properties, and evaluation results of the sensory tests of the obtained lactic ice product are shown in Table 1.

Comparative Example 1

A lactic ice product was produced in a similar manner as in Example 1 except that the commercially-available , concentrated green tea extract ("POLYPHENONE HG", Mitsui Norin Co. , Ltd.) was used at the ratio shown in Table 1 in place of the purified green tea extract 1 and the content of the raw milk was changed. The analysis data, overrun, shape retention properties, and evaluation results of the sensory tests of the obtained lactic ice product are shown in Table 1.

Comparative Example 2

A lactic ice product was produced in a similar manner as in Example 7 except that the commercially-available , concentrated green tea extract was used at the ratio shown in Table 1 in place of the purified green tea extract 1. The analysis data, overrun, shape retention properties, and evaluation results of the sensory tests of the obtained lactic ice product are shown in Table 1.

[0056] Table 1

| | | Examples | | | | | | | | Comp. Exs. | |
|---|---|---|---|---|---|---|---|---|---|---|---|
| | | 1 * | 2 | 3 | 4 | 5 | 6 | 7 | 8 | 1 | 2 |
| Formulatoins (mass%) | Raw milk | 57.40 | 56.88 | 53.75 | 57.58 | 56.88 | 56.88 | 72.9 | 61.0 | 57.32 | 73.34 |
| | Animal fresh cream | 14.3 | 14.3 | 14.3 | 14.3 | 14.3 | 14.3 | 14.3 | 14.3 | 14.3 | 14.3 |
| | Egg yolks | 10.3 | 10.3 | 10.3 | 10.3 | 10.3 | 10.3 | 10.3 | 10.3 | 10.3 | 10.3 |
| | Granulated sugar | 16.1 | 16.1 | 16.1 | 16.1 | 12.1 | 16.1 | - | - | 16.1 | - |
| | Sucralose | - | - | - | - | - | - | 0.08 | - | - | 0.08 |
| | Erythritol | - | - | - | - | - | - | - | 12.0 | | |
| | Purified green tea extract 1 | 0.35 | 0.87 | 4.0 | - | 0.87 | 0.87 | 0.87 | 0.87 | - | - |
| | Purified green tea extract 2 | - | - | - | 0.17 | - | - | - | - | - | - |
| | Concentrated green tea extract | - | - | - | - | - | - | - | - | 0.43 | 0.43 |
| | Emulsifier | 0.2 | 0.2 | 0.2 | 0.2 | 0.2 | 0.2 | 0.2 | 0.2 | 0.2 | 0.2 |
| | Stabilizer | 0.3 | 0.3 | 0.3 | 0.3 | 0.3 | 0.3 | 0.3 | 0.3 | 0.3 | 0.3 |
| | Vanilla essence | 1.0 | 1.0 | 1.0 | 1.0 | - | - | 1.0 | 1.0 | 1.0 | 1.0 |
| | Chocolate | - | - | - | - | 5.0 | - | - | - | - | - |
| | Matcha | - | - | - | - | - | 1.0 | - | - | - | - |
| | Food color | 0.05 | 0.05 | 0.05 | 0.05 | 0.05 | 0.05 | 0.05 | 0.05 | 0.05 | 0.05 |
| | Total | 100 | 100 | 100 | 100 | 100 | 100 | 100 | 100 | 100 | 100 |

*Reference Example

EP 2 491 793 B1

# Table 1 (Cont'd)

| | | Examples | | | | | | | | Comp. Exs. | |
|---|---|---|---|---|---|---|---|---|---|---|---|
| | | 1 * | 2 | 3 | 4 | 5 | 6 | 7 | 8 | 1 | 2 |
| Analysis data | (A) Non-polymer catechins (mass%) | 0.05 | 0.13 | 0.6 | 0.13 | 0.13 | 0.14 | 0.13 | 0.13 | 0.13 | 0.13 |
| | (B) Caffeine/ (A) non-polymer catechins (-) | 0.06 | 0.06 | 0.06 | 0.01 | 0.06 | 0.09 | 0.06 | 0.06 | 0.20 | 0.20 |
| | Ratio of gallate forms in non-polymer catechins (mass%) | 45.1 | 45.1 | 45.1 | 20.2 | 45.1 | 48.1 | 45.1 | 45.1 | 58.6 | 58.6 |
| | Concentration of non-polymer catechins in solids of purified green tea extract (mass%) | 60.5 | 60.5 | 60.5 | 72.3 | 60.5 | 60.5 | 60.5 | 60.5 | 30.4 | 30.4 |
| | Content of solids in ice cream (mass%) | 36.6 | 36.6 | 37.0 | 36.6 | 37.1 | 37.1 | 22.5 | 33.0 | 20.8 | 22.8 |
| | Arrival time until maximum overrun (min) | 20 | 20 | 20 | 20 | 20 | 20 | 20 | 20 | 20 | 20 |
| | Overrun (%) | 110.2 | 112.6 | 116.3 | 113.6 | 112.1 | 111.2 | 119.2 | 120.1 | 105.0 | 108.6 |
| | Shape retention properties (dropped amount: g) | 2.2 | 2.0 | 1.8 | 2.3 | 2.2 | 2.1 | 2.4 | 1.9 | 6.3 | 5.7 |
| | Form retention rate (%) | 95.6 | 96.0 | 96.4 | 95.4 | 95.6 | 95.8 | 96.5 | 97.5 | 87.4 | 88.4 |
| Evaluation | Texture shortly after Production[1] | 4 | 5 | 4 | 5 | 5 | 5 | 4 | 4 | 3 | 2 |
| | Refreshing sensation shortly after production[2] | 4 | 4 | 5 | 4 | 4 | 4 | 4 | 5 | 3 | 2 |
| | Texture after stored at -20°C for 28 days[1] | 4 | 4 | 4 | 4 | 4 | 4 | 4 | 4 | 2 | 1 |
| | Refreshing sensation after stored at -20°C for 28 days[2] | 4 | 4 | 4 | 4 | 4 | 4 | 4 | 5 | 2 | 2 |

1) Five-stage evaluation of texture, 5: very smooth texture, 4: smooth texture, 3: normal texture, 2: inferior texture, 1: bad texture.

2) Five-stage evaluation of refreshing sensation, 5: very high refreshing sensation, 4: high refreshing sensation, 3: normal refreshing sensation, 2: inferior refreshing sensation, 1: no refreshing sensation.

3) The various formulations in the table contained (C) proteins: 4.5 mass%, (D) edible oils or fats: 11.2 mass%, (E) saccharides: 19.7 mass%.

*Reference Example

[0073] It has been found from the results of Table 1 that the addition of the non-polymer catechins derived from green tea and having specific properties makes it possible to have high shape retention properties even when the overrun is set high, and as a consequence, that an ice cream can be obtained with a good texture and refreshing sensation shortly after its production, and moreover, these texture and refreshing sensation remain stable without deterioration even after long-term storage.

**Claims**

1.  An ice cream comprising the following ingredients (A) and (B):

    (A) the non-polymer catechins, and
    (B) caffeine,

    wherein a content mass ratio of the ingredient (B) to the ingredient (A), [(B)/(A)] is from 0.0001 to 0.18, wherein the content of the non-polymer catechins (A) in the ice cream is 0.1 to 0.8 mass%.

2.  The ice cream according to claim 1, wherein a ratio of gallate forms in the ingredient (A) is from 5 to 55 mass%.

3.  The ice cream according to claim 1 or 2, wherein a content of the ingredient (A) is from 0.05 to 1.5 mass%.

4.  The ice cream according to any one of claims 1-3, wherein a content of solids in an entirety of the ice cream is from 20 to 50 mass%.

5.  The ice cream according to any one of claims 1-3, wherein a content of solids in an entirety of the ice cream is from 22 to 40 mass%.

6.  The ice cream according to any one of claims 1-3, wherein a content of solids in an entirety of the ice cream is from 25 to 38 mass%.

7.  The ice cream according to any one of claims 1-6, which is one obtained by adding a purified green tea extract in which a concentration of the non-polymer catechins in solids is from 55 to 90 mass%.

8.  The ice cream according to any one of claims 1-6, which is one obtained by adding a purified green tea extract in which a concentration of the non-polymer catechins in solids is from 55 to 75 mass%.

9.  The ice cream according to any one of claims 1-8, which is an ice cream product, an ice milk product, a lactic ice product or an ice confection product.

10. A method for improving shape retention properties of an ice cream, which comprises adding to the ice cream the following ingredients (A) and (B):

    (A) the non-polymer catechins, and
    (B) caffeine,

    such that a content mass ratio of the ingredient (B) to the ingredient (A), [(B)/(A)] becomes from 0.0001 to 0.18, wherein the ingredient (A) is added such that a content of the ingredient (A) becomes from 0.1 to 0.8 mass%.

11. The method according to claim 10, wherein a content of solids in an entirety of the ice cream is controlled to 20 to 50 mass%.

12. The method according to claim 10 or 11, wherein a purified green tea extract, in which a concentration of the non-polymer catechins in solids is from 55 to 75 mass%, is added.

13. Use of the following ingredients (A) and (B) for improving a texture of an ice cream:

    (A) the non-polymer catechins, and
    (B) caffeine,

    wherein said ingredients are added to the ice cream such that a content mass ratio of the ingredient (B) to the ingredient (A), [(B)/(A)] becomes from 0.0001 to 0.18, wherein the ingredient (A) is added such that a content of the ingredient (A) becomes from 0.1 to 0.8 mass%.

14. The use according to claim 13, wherein a content of solids in an entirety of the ice cream is controlled to 20 to 50 mass%.

15. The use according to claim 13 or 14, wherein a purified green tea extract, in which a concentration of the non-polymer catechins in solids is from 55 to 75 mass%, is added.

**Patentansprüche**

1. Eiscreme, umfassend die folgenden Bestandteile (A) und (B) :

   (A) Nicht-Polymerkatechine und
   (B) Koffein,

   worin ein Masseverhältnis des Bestandteils (B) zum Bestandteil (A), [(B)/(A)] von 0,0001 bis 0,18 ist, worin der Gehalt der Nicht-Polymerkatechine (A) in der Eiscreme 0,1 bis 0,8 Masse% ist.

2. Eiscreme gemäß Anspruch 1, worin ein Verhältnis von Gallatformen im Bestandteil (A) von 5 bis 55 Masse% ist.

3. Eiscreme gemäß Anspruch 1 oder 2, worin ein Gehalt des Bestandteils (A) von 0,05 bis 1,5 Masse% ist.

4. Eiscreme gemäß einem der Ansprüche 1 bis 3, worin ein Gehalt an Feststoffen in einer Gesamtheit der Eiscreme von 20 bis 50 Masse% ist.

5. Eiscreme gemäß einem der Ansprüche 1 bis 3, worin ein Gehalt von Feststoffen in der Gesamtheit der Eiscreme von 22 bis 40 Masse% ist.

6. Eiscreme gemäß einem der Ansprüche 1 bis 3, worin ein Gehalt von Feststoffen in der Gesamtheit der Eiscreme von 25 bis 38 Masse% ist.

7. Eiscreme gemäß einem der Ansprüche 1 bis 6, die eine ist, erhalten durch Zugabe eines gereinigten Grüntee-Extraktes, worin eine Konzentration der Nicht-Polymerkatechine in Feststoffen von 55 bis 90 Masse% ist.

8. Eiscreme gemäß einem der Ansprüche 1 bis 6, die eine ist, erhalten durch Zugabe eines gereinigten Grüntee-Extraktes, worin eine Konzentration der Nicht-Polymerkatechine in Feststoffen von 55 bis 75 Masse% ist.

9. Eiscreme gemäß einem der Ansprüche 1 bis 8, die ein Eiscremeprodukt, ein Eismilchprodukt, ein Milcheisprodukt oder ein Eiskonfektprodukt ist.

10. Verfahren zur Verbesserung von
    Formbeibehaltungseigenschaften von Eiscreme, umfassend die Zugabe der folgenden Bestandteile (A) und (B) zur Eiscreme:

    (A) Nicht-Polymerkatechine und
    (B) Koffein,

    sodass ein Masseverhältnis des Bestandteils (B) zum Bestandteil (A), [(B)/(A)] von 0,0001 bis 0,18 wird, worin der Bestandteil (A) so zugegeben wird, dass der Gehalt des Bestandteils (A) von 0,1 bis 0,8 Masse% wird.

11. Verfahren gemäß Anspruch 10, worin ein Gehalt von Feststoffen in einer Gesamtheit der Eiscreme auf 20 bis 50 Masse% eingestellt wird.

12. Verfahren gemäß Anspruch 10 oder 11, worin ein gereinigter Grüntee-Extrakt, worin eine Konzentration der Nicht-Polymerkatechine in Feststoffen von 55 bis 75 Masse% ist, zugegeben wird.

**13.** Verwendung der folgenden Bestandteile (A) und (B) zur Verbesserung einer Textur einer Eiscreme:

(A) Nicht-Polymerkatechine und
(B) Koffein,

worin die Bestandteile zur Eiscreme so zugegeben werden, dass ein Masseverhältnis des Bestandteils (B) zum Bestandteil (A), [(B)/(A)] von 0,0001 bis 0,18 wird, worin der Bestandteil (A) so zugegeben wird, dass ein Gehalt des Bestandteils (A) von 0,1 bis 0,8 Masse% wird.

**14.** Verwendung gemäß Anspruch 13, worin ein Gehalt von Feststoffen in einer Gesamtheit der Eiscreme auf 20 bis 50 Masse% eingestellt wird.

**15.** Verwendung gemäß Anspruch 13 oder 14, worin ein gereinigter Grüntee-Extrakt, worin eine Konzentration der Nicht-Polymerkatechine als Feststoffe von 55 bis 75 Masse% ist, zugegeben wird.

**Revendications**

**1.** Crème glacée comprenant les ingrédients (A) et (B) suivants :

(A) les catéchines non polymères et
(B) de la caféine,

dans laquelle le rapport massique de le teneur en ingrédient (B) à la teneur en ingrédient (A), [(B)/(A)], est de 0,0001 à 0,18,
dans laquelle la teneur en catéchines non polymères (A) dans la crème glacée est de 0,1 à 0,8 % en masse.

**2.** Crème glacée selon la revendication 1, dans laquelle le rapport de formes gallate dans l'ingrédient (A) est de 5 à 55 % en masse.

**3.** Crème glacée selon la revendication 1 ou 2, dans laquelle la teneur en ingrédient (A) est de 0,05 à 1,5 % en masse.

**4.** Crème glacée selon l'une quelconque des revendications 1 à 3, dans laquelle la teneur en matières solides dans la totalité de la crème glacée est de 20 à 50 % en masse.

**5.** Crème glacée selon l'une quelconque des revendications 1 à 3, dans laquelle la teneur en matières solides dans la totalité de la crème glacée est de 22 à 40 % en masse.

**6.** Crème glacée selon l'une quelconque des revendications 1 à 3, dans laquelle la teneur en matières solides dans la totalité de la crème glacée est de 25 à 38 % en masse.

**7.** Crème glacée selon l'une quelconque des revendications 1 à 6, qui est obtenue en ajoutant un extrait de thé vert purifié dans lequel la concentration des catéchines non polymères dans les matières solides est de 55 à 90 % en masse.

**8.** Crème glacée selon l'une quelconque des revendications 1 à 6, qui est obtenue en ajoutant un extrait de thé vert purifié dans lequel la concentration des catéchines non polymères dans les matières solides est de 55 à 75 % en masse.

**9.** Crème glacée selon l'une quelconque des revendications 1 à 8, qui est un produit à base de crème glacée, un produit à base de lait glacé, un produit à base de glace lactique ou un produit à base de confiserie glacée.

**10.** Procédé permettant d'améliorer les propriétés de conservation de forme d'une crème glacée, qui comprend l'ajout à la crème glacée des ingrédients (A) et (B) suivants :

(A) les catéchines non polymères et
(B) de la caféine,

de sorte que le rapport massique de la teneur en ingrédient (B) à la teneur en ingrédient (A), [(B)/(A)], devienne de 0,0001 à 0,18, dans lequel l'ingrédient (A) est ajouté de sorte que la teneur en ingrédient (A) devienne de 0,1 à 0,8 % en masse.

11. Procédé selon la revendication 10, dans lequel la teneur en matières solides dans la totalité de la crème glacée est réglée à 20 à 50 % en masse.

12. Procédé selon la revendication 10 ou 11, dans lequel un extrait de thé vert purifié, dans lequel la concentration des catéchines non polymères dans les matières solides est de 55 à 75 % en masse, est ajouté.

13. Utilisation des ingrédients (A) et (B) suivants pour améliorer la texture d'une crème glacée :

   (A) les catéchines non polymères et
   (B) de la caféine,

dans laquelle lesdits ingrédients sont ajoutés à la crème glacée de sorte que le rapport massique de la teneur en ingrédient (B) à la teneur en ingrédient (A), [(B)/(A)], devienne de 0,0001 à 0,18,
dans laquelle l'ingrédient (A) est ajouté de sorte que la teneur en ingrédient (A) devienne de 0,1 à 0,8 % en masse.

14. Utilisation selon la revendication 13, dans laquelle la teneur en matières solides dans la totalité de la crème glacée est réglée à 20 à 50 % en masse.

15. Utilisation selon la revendication 13 ou 14, dans laquelle un extrait de thé vert purifié, dans lequel la concentration des catéchines non polymères dans des matières solides est de 55 à 75 % en masse, est ajouté.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008253173 A
- JP 5041949 A
- WO 2008072360 A
- JP 2007001893 A
- JP 2006129757 A
- JP 2004305012 A
- CN 1934981
- EP 2098121 A
- JP 2005058211 A
- JP 2007262400 A
- JP 2007282568 A
- JP 2006160656 A
- JP 2008079609 A
- JP 2004321105 A
- JP 59219384 A
- JP 4020589 A
- JP 5260907 A
- JP 5306279 A